# EUROPEAN PATENT APPLICATION

(11) **EP 2 613 582 A1**
(43) Date of publication of application: **10.07.2013**
(21) Application number: 12290004.6
(22) Date of filing: 04.01.2012
(51) Int. Cl.: H04W 12/02, H04W 12/04, H04W 36/00, H04L 9/00

(54) **Methods of transmission to or reception by a telecommunications node of sensitive data, and apparatus therefor**

(71) Applicant: Alcatel Lucent, 75007 Paris (FR)
(72) Inventor: Putman, Tony, Brinkworth Chiipenham SN15 5AQ (GB); Freynet, Marc, Swindon, Wiltshire SN1 3ED (GB)
(74) Representative: Sarup, David Alexander

(57) **Abstract**

A method is provided of transmission to a telecommunications node (30) of sensitive data to be used by the telecommunications node. The method comprises: receiving a message (33) including the sensitive data, separating the sensitive data from the rest of the message, encrypting the sensitive data, and transmitting a modified message (36) comprising the encrypted sensitive data and the unmodified rest of the message.

## Description

### Field of the Invention

The present invention relates to telecommunications.

### Description of the Related Art

Telecommunications systems are well-known. As regards wireless telecommunications systems, many are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the terms small cells and femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres. Femtocell base stations have auto-configuring properties so as to support plug-and-play deployment by users, for example in which femtocell base stations integrate themselves into an existing macrocell network so as to connect to the core network of the macrocell network. Femtocell base stations are intended primarily for users belonging to a particular home or office. Femtocell base stations may be, for example, private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications. An alternative to such a wired broadband backhaul is to have a wireless backhaul.

Other types of telecommunication systems are known, for example wired networks.

### Summary

The reader is referred to the appended independent claims. Some preferred features are laid out in the dependent claims.

An example of the present invention is a method of transmission to a telecommunications node of sensitive data to be used by the telecommunications node. The method comprises: receiving a message including the sensitive data, separating the sensitive data from the rest of the message, encrypting the sensitive data, and transmitting a modified message comprising the encrypted sensitive data and the unmodified rest of the message.

In a preferred method, said transmitting comprises providing a modified message by combining the encrypted sensitive data and the unmodified rest of the message and transmitting the modified message.

Some preferred embodiments provide that the message source encrypts just the sensitive data using the encryption information which is available only to the secure area of the destination node. The destination node may be a small cell base station. The sensitive data may be for example a symmetric encryption key or other security sensitive data.

Alternatively in some preferred embodiments an intermediate node between a source and the destination can perform deep packet inspection of the message and encrypt just the sensitive data within the message using encryption information known to only the secure processor in the destination node.

The modified message is preferably of the same format as the received message. In consequence, in preferred embodiments no special processing is required upon reception at the destination node, basically except for passing the sensitive data to the secure processor for decrypting.

In some preferred embodiments, core network operations are not affected, nor are most of the operations in the small cell base station or other destination node. It may be considered that lightweight message inspection is implemented in the gateway (or intermediate node) and exchange of encrypted data is undertaken between the gateway and the secure processor of the destination node.

Some preferred embodiments allow use of standard message formats whilst increasing the security of sensitive data in the message and decreasing the complexity of maintaining security as compared to known approaches. In some preferred embodiments, the transfer of the keys to the femtocell base station is a relatively infrequent event, and the complexity of computer code inside the secure processor is kept low to reduce the risk of exploitable security flaws arising in the processor.

Another example of the present invention provides a method of reception by a telecommunications node of sensitive data to be used by the telecommunications node. The method comprises receiving a message including encrypted sensitive data and the unmodified rest of the message, separating the encrypted sensitive data from the rest of the message, decrypting the sensitive data in a secure processor, and using the sensitive data. The telecommunications node is preferably a small cell base station.

The present invention also relates to a telecommunications node, which is preferably a small cell base station, to a telecommunications network node which is preferably a small cell gateway, and to a telecommunications network.

### Brief Description of the Drawings

Embodiments of the present invention will now be described by way of example and with reference to the drawings, in which:
Figure 1 is a diagram illustrating a known approach to transmission of a message including sensitive data (PRIOR ART),
Figure 2 is a diagram illustrating a wireless communications network according to a first embodiment of the present invention,
Figure 3 is a diagram illustrating an example femtocell base station deployment within one macrocell shown in Figure 1,
Figure 4 is a diagram illustrating in more detail the gateway and femtocell base station shown in Figure 3 (the core network is also shown),
Figure 5 is a diagram illustrating a message prior to encryption of the sensitive data,
Figure 6 is a diagram illustrating the modified message, and
Figure 7 is a diagram illustrating a second embodiment in which an intermediate device is provided between a gateway and a femtocell base station.

### Detailed Description

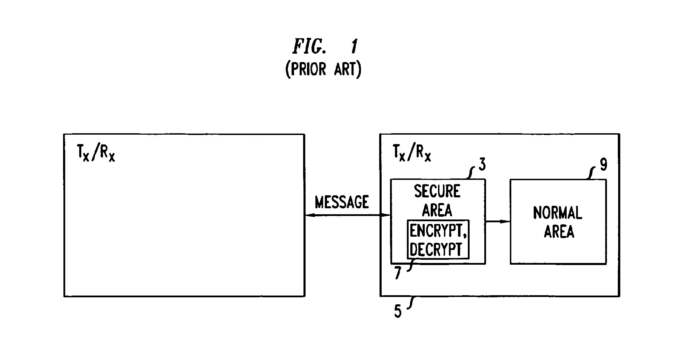

Referring to Figure 1, in one known scenario, a proportion of the information which is embedded in a message according to a standard protocol for digital data transmission must be protected from inspection, even by a recipient of the message. As shown in Figure 1, a known approach is to provide a secure processor 3 in a receiver 5, so that the message is encrypted or decrypted within the relevant functional element 7 within the secure processor. The secure processor 3 extracts the sensitive encrypted data before forwarding the remaining parts of the message for processing in the normal insecure part 9 of the receiver. In this approach a large amount of processing is done in the secure processor, which increases the risk that its operation can be hacked into by the fraudulent user seeking to obtain the secured information, so compromising security.

The inventors realised that in an alternative proposal (not prior art nor an embodiment of the invention) where the receiver is a femtocell base station, if that message could be intercepted, the sensitive data, could be extracted and fraudulently used. Specifically where the sensitive data is one or more encryption keys used for securing communications over air between a user terminal and the femtocell base station, the keys may be used to eavesdrop on voice traffic or other data traffic. The inventors realised that, in this approach, it would be complicated to encrypt the whole message for transmission then upon reception parse the message in the secure processor at a femtocell base station, and so the secure processor would be correspondingly complex. By keys, we mean, of course, key codes used in encryption/decryption.

Turning now to some example embodiments of the present invention, we now describe a network including femtocell base stations then look in greater detail at secure communication of sensitive data (such as encryption keys) for use in the femtocell base station.

### Network

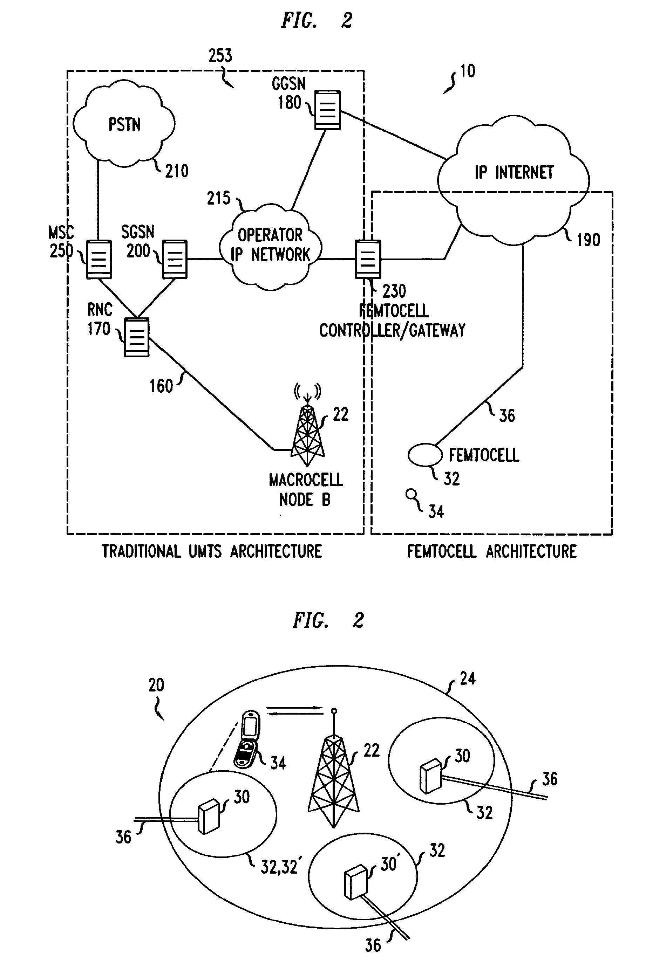

As shown in Figures 2 and 3, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 2, the network 10 is managed by a radio network controller, RNC, 170. The radio network controller, RNC, 170 controls the operation, for example by communicating with macrocell base stations 22 via a backhaul communications link 160. The radio network controller 170 stores information about the geographical relationships between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with serving general packet radio service support nodes (SGSNs) 220 and a gateway general packet radio support node (GGSN) 180. The GGSN then communicates with a packet-switch core 190 such as, for example, the Internet.

The MSC 250, SGSN 220, GGSN 180 and operator IP network constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations 30. These connections to the femtocell controller/gateway 230 are broadband Internet Protocol ("backhaul") connections.

In Figure 3, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 2, the user of mobile terminal 34 is a preferred user of the nearest 32' of the femtocells 32.

As shown in Figure 3, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36 allow communications between the femtocell base stations 30 through the core network (not shown). The macrocell base station is also connected to the core network (not shown in Figure 3).

### Secure communication of data

A femtocell base station is typically deployed in a subscriber's residence and uses the subscriber's backhaul baseband link in order to provide service to mobile terminals of known type. From a computer-logic perspective, femtocell base stations are part of a mobile operator's network, however they are deployed in relatively insecure locations.

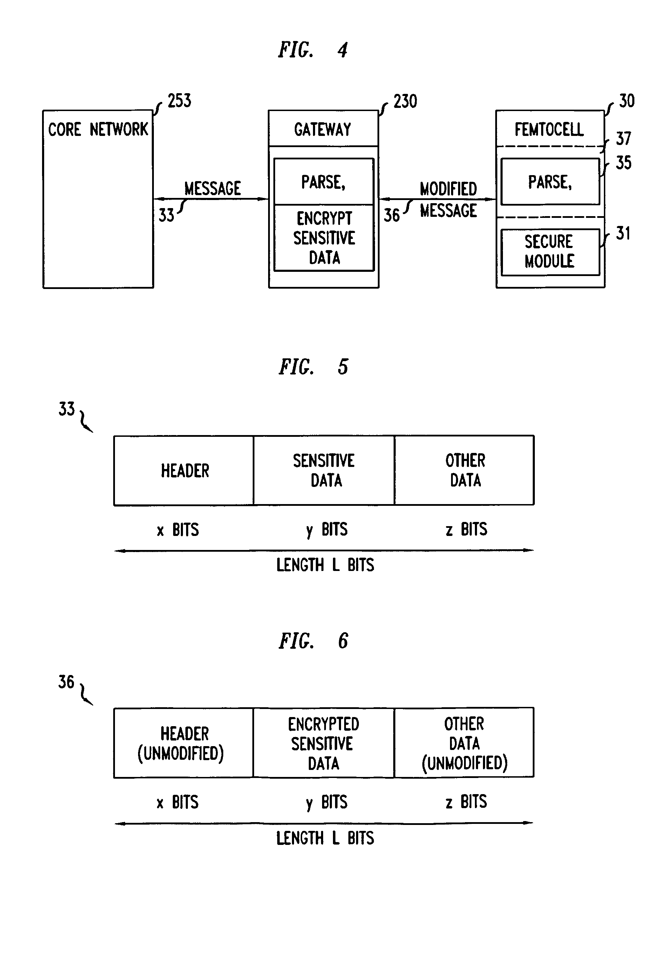

As shown in Figure 4, a femtocell base station 30 includes a secure processor 31, which implements the functions of the femtocell base station that are more sensitive to potential attack, and other parts or modules which we refer to as non-secure part 37. Femtocell base stations encrypt voice and other data both over the broadband backhaul 36 and over air. The encryption used over the backhaul and the encryption used over air uses different technologies and different encryption/decryption keys. The interworking between the broadband backhaul 36 and over air necessarily causes data to be unencrypted and so exposed to attack at a stage in processing so that processing stage is done within the secure processor 31.

As shown in Figure 4, an encryption key to be used by the femtocell base station 30 in over air communications is sent in a standard message 33 from the core network 253 to the gateway 230.

The message 33 is parsed within the gateway and only the sensitive data identified by parsing is then encrypted. Specifically the keys for use by the air interface are detected and encrypted. Parsing is an operation that is well known to an engineer in this field and may typically involve identifying, or splitting out, meaningful portions of messages for subsequent processing. The sensitive data is data that is security sensitive, so is to be encrypted in order to be resistant to interception or hacking by an unauthorised person.

The encryption is done using a key known only to the gateway 230 and the secure processor 31 of the femtocell base station 30. In this example the encrypted data is encryption keys for use by the femtocell base station 30 over the air interface, in other words for wireless radio communications with mobile terminals (not shown in Figure 4). The remainder of the message, which may be considered non-sensitive data, is unmodified.

As shown in Figure 5, in this example the message 33 before encryption is a digital data packet of size *l* bits consisting of a header (x bits) followed by a sensitive data portion (y bits) and a non-sensitive data portion (z bits).

As shown in Figure 6, in this example the modified message 36 is a digital data packet also of size *l* bits consisting of the unmodified header (x bits), the encrypted sensitive data portion (y bits) and the unmodified non-sensitive data portion (z bits).

The encryption is done in such a way that the overall size of the sensitive data (namely the key) within the message is not changed. This allows the format of the message to remain unchanged even though the contents of the message have been somewhat modified, namely by encrypting the sensitive data.

The modified message is transmitted to the femtocell base station.

At the femtocell base station, on receiving the message, the message is parsed by a parser 35 (that is in the non-secure part 37 outside of the secure processor 31) so as to extract the encrypted air interface keys and pass them to the secure processor 31. That the modified message 36 takes the same format as the original message 33, means that parsing of the received modified message 36 proceeds identically to if the message had not been modified by encrypting the sensitive data. It can be considered that the parser 35 is unaware of the message modification.

The encrypted data (namely the encryption keys for use over air) is processed in the secure processor 31. All other parts of the message are processed outside of the secure processor 31, so the complexity of the computer code in the secure processor 31 is kept low reducing the risk of an exploitable security flaw in the secure processor.

It will be noted that the keys for the air interface have been encrypted in the gateway so cannot be determined by a hacker who has successfully accessed the non-secure part 37 of the femtocell base station.

In the secure processor 31, the femtocell base station decrypts the keys to be used by the air interface, and uses these keys to encrypt for transmission and decrypt upon reception, the over-air Voice and Data traffic. This maintains the security of those communications even if the non-secure parts of the femtocell base station are compromised from a security perspective.

In this example, the keys are symmetric encryption keys. The transfer of the keys to the femtocell base station is a relatively infrequent event.

### An alternative example

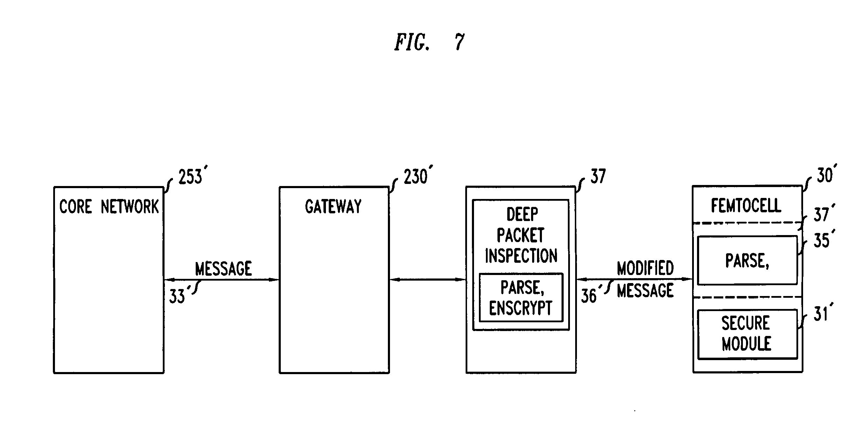

As shown in Figure 7, in an alternative example an intermediate node 37 is inserted between the gateway 230' and femtocell base station 30'. The intermediate node 37 performs deep packet inspection of the message to encrypt just the sensitive data using encryption keys known within the femtocell base station 30' only by the secure processor 31'. The rest of the message is forwarded unencrypted to the femtocell base station 30'.

In more detail, as shown in Figure 7, the femtocell base station 30' includes a secure processor 31', which implements the functions of the femtocell base station that are more sensitive to potential attack, and other parts or modules which we refer to as non-secure part 37'. Femtocell base stations encrypt voice and other data both over the broadband backhaul 36' and over air. The encryption used over backhaul and the encryption used over air uses different technologies and different encryption/decryption keys. The interworking between the broadband backhaul 36' and over air necessarily causes data to be unencrypted and so exposed to attack at a stage in processing so that processing stage is done within the secure processor 31'.

An encryption key to be used by the femtocell base station 30 in over air communications are sent in a standard message 33' from the core network 253' to the gateway 230'.

The message is forwarded from the gateway 230' to the intermediate node 37. Using deep packet inspection, the message 33' is parsed within the intermediate node and only the sensitive data identified by parsing is then encrypted. Specifically the keys for use by the air interface are detected and encrypted.

The encryption is done using a key known only to the intermediate node 37 and the secure processor 31' of the femtocell base station 30'. In this example the encrypted data is encryption keys for use by the femtocell base station 30' over the air interface, in other words for wireless radio communications with mobile terminals (not shown in Figure 5). The remainder of the message is unmodified.

The message is transmitted by the intermediate node 37 to the femtocell base station.

At the femtocell base station, on receiving the message, the message is parsed by a parser 35' (that is outside of the secure processor 31') so as to extract the encrypted air interface keys and pass them to the secure processor 31'. The encrypted data (namely the encryption keys for use over air) is processed in the secure processor 31'. All other parts of the message are processed outside of the secure processor 31.

It will be noted that the keys for the air interface have been encrypted in the intermediate node so cannot be determined by a hacker who has successfully accessed the non-secure parts of the femtocell base station.

In the secure processor 31', the femtocell base station decrypts the keys to be used by the air interface, and uses these keys to encrypt for transmission and decrypt upon reception, the over-air Voice and Data traffic. This maintains the security of those communications even if the non-secure part of the femtocell base station is compromised from a security perspective.

The present invention may be embodied in other specific forms without departing from its essential characteristics. For example, in some other embodiments, other formats of message and modified message are possible; for example formats having two or more blocks of sensitive data.

For example, rather than being a femtocell base station, the telecommunications node could be another device in a person's home for which some level of security from tampering/unauthorised access needs to be maintained. Examples include smart meters and set-top boxes.

The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of transmission to a telecommunications node of sensitive data to be used by the telecommunications node, the method comprising:
receiving a message including the sensitive data,
separating the sensitive data from the rest of the message,
encrypting the sensitive data, and
transmitting a modified message comprising the encrypted sensitive data and the unmodified rest of the message.

2. A method of transmission according to claim 1, in which the telecommunications node is a small cell base station.

3. A method of transmission according to claim 2, performed at a small cell gateway.

4. A method of transmission according to claim 2, performed at a node between a small cell gateway and the small cell base station, the separating the sensitive data from the rest of the message comprising deep packet inspection in the node.

5. A method of transmission according to any preceding claim, in which the modified message has the same format as the received message.

6. A method of transmission according to any preceding claim, in which the sensitive data comprises an encryption key code to be used in over air communications.

7. A method of transmission according to any preceding claim,
the method further comprising at the telecommunications node:
receiving the modified message comprising the encrypted sensitive data and unmodified rest of the message,
separating the encrypted sensitive data from the rest of the message,
decrypting the sensitive data in a secure processor, and
using the sensitive data.

8. A telecommunications network node configured to be connectable to at least one other telecommunications node, the telecommunications network node comprising:
a receiver configured to receive a message including sensitive data to be used in the first telecommunications node,
a parser configured to separate the sensitive data from the rest of the message,
an encryptor configured to encrypt the sensitive data, and
a transmitter configured to transmit a modified message comprising the encrypted sensitive data and the unmodified rest of the message.

9. A telecommunications network node according to claim 8, which is a small cell gateway configured to be connectable to the at least one other telecommunications node which is at least one small cell base station.

10. A telecommunications network node according to claim 8, which is an intermediate node connected in use between a small cell gateway and a small cell base station.

11. A telecommunications network node according to any of claims 8 to 10, in which the modified message has the same format as the received message.

12. A telecommunications network comprising a telecommunications network node according to any of claims 8 to 11 connected to another node, said another node comprising:
a receiver configured to receive the modified message including the encrypted sensitive data and the unmodified rest of the message,
a parser configured to separate the encrypted sensitive data from the rest of the modified message,
a decrypter that is a secure processor and is configured to decrypt the sensitive data, and
a processor configured to use the sensitive data.

13. A method of reception by a telecommunications node of sensitive data to be used by the telecommunications node, the method comprising:
receiving a message including encrypted sensitive data and the unmodified rest of the message,
separating the encrypted sensitive data from the rest of the message,
decrypting the sensitive data in a secure processor, and
using the sensitive data.

14. A method of reception according to claim 13, in which the telecommunications node is a small cell base station.

15. A telecommunications node configured to be connectable to at least telecommunications network node, the telecommunications node comprising:
a receiver configured to receive a message from the telecommunications network node including encrypted sensitive data and the unmodified rest of the message,
a parser configured to separate the encrypted sensitive data from the rest of the message,
a decrypter that is a secure processor and is configured to decrypt the sensitive data, and
a processor configured to use the sensitive data.

16. A telecommunications node according to claim 15 which is a small cell base station.

17. A telecommunications node according to claim 15 or claim 16, in which the sensitive data comprises an encryption key code to be used in over air communications.

## Amended claims

### Amended claims in accordance with Rule 137(2) EPC.

**1.** A method of transmission to a telecommunications node (30) of sensitive data to be used by the telecommunications node, the method comprising:
receiving a message (33) including the sensitive data,
separating (35) the sensitive data from the rest of the message,
encrypting the sensitive data, and
transmitting a modified message (36) comprising the encrypted sensitive data and the unmodified rest of the message, **characterised in that** the modified message has the same format as the received message.

**2.** A method of transmission according to claim 1, in which the telecommunications node (30) is a femtocell base station.

**3.** A method of transmission according to claim 2, performed at a femtocell gateway (230).

**4.** A method of transmission according to claim 2, performed at a node (37) between a femtocell gateway (230') and the femtocell base station (30'), the separating the sensitive data from the rest of the message comprising deep packet inspection in the node.

**5.** A method of transmission according to any preceding claim, in which the sensitive data comprises an encryption key code to be used in over air communications.

**6.** A method of transmission according to any preceding claim,
the method further comprising at the telecommunications node (30):
receiving the modified message (36) comprising the encrypted sensitive data and unmodified rest of the message,
separating (35) the encrypted sensitive data from the rest of the message,
decrypting the sensitive data in a secure processor (31), and
using the sensitive data.

**7.** A telecommunications network node (230,37) configured to be connectable to at least one other telecommunications node (30), the telecommunications network node (230) comprising:
a receiver configured to receive a message (33) including sensitive data to be used in said telecommunications node,
a parser configured to separate the sensitive data from the rest of the message,
an encryptor configured to encrypt the sensitive data, and
a transmitter configured to transmit a modified message comprising the encrypted sensitive data and the unmodified rest of the message,
**characterised in that** the modified message has the same format as the received message.

**8.** A telecommunications network node according to claim 7, which is a femtocell gateway (230) configured to be connectable to the at least one other telecommunications node which is at least one femtocell base station (30).

**9.** A telecommunications network node according to claim 7, which is an intermediate node (37) connected in use between a femtocell gateway (230') and a femtocell base station (30').

**10.** A telecommunications network comprising a telecommunications network node (230,37) according to any of claims 7 to 9 connected to another node (30), said another node (30) comprising:
a receiver configured to receive the modified message (36) including the encrypted sensitive data and the unmodified rest of the message,
a parser (35) configured to separate the encrypted sensitive data from the rest of the modified message,
a decrypter that is a secure processor (31) and is configured to decrypt the sensitive data, and
a processor configured to use the sensitive data.
